# EUROPÄISCHE PATENTANMELDUNG

(11) **EP 4 733 367 A1**
(43) Veröffentlichungstag der Anmeldung: **29.04.2026**
(21) Anmeldenummer: 25196707.1
(22) Anmeldetag: 19.08.2025
(51) Int. Cl.: C09J 133/14

(54) **KLEBSTOFFZUSAMMENSETZUNG**

(30) Priorität: 24.10.2024 DE 102024131040
(71) Anmelder: SICK AG, 79183 Waldkirch (DE)
(72) Erfinder: Hanselmann, Gabriel, 79369 Wyhl (DE); Schneider, Cesar Eduardo, 79106 Freiburg (DE)
(74) Vertreter: Manitz Finsterwald Patent- und Rechtsanwaltspartnerschaft mbB

(57) **Zusammenfassung**

Eine Klebstoffzusammensetzung umfasst einen polymerisierbaren Grundstoff, der durch Einwirkung von Wärme und/oder Licht unter Schrumpfung in einen ausgehärteten Zustand überführbar ist, und einen expansionsfähigen Zusatzstoff, der sich unter einer Einwirkung von Wärme und/oder Licht ausdehnt.

## Beschreibung

Die Erfindung betrifft eine Klebstoffzusammensetzung umfassend einen polymerisierbaren Grundstoff, der durch Einwirkung von Wärme und/oder Licht unter Schrumpfung in einen ausgehärteten Zustand überführbar ist.

Solche Klebstoffe werden auf verschiedenen Gebieten der Technik zum Fügen von Bauteilen oder Baugruppen eingesetzt. Üblicherweise wird ein Klebstoff auf Polymerbasis in fließfähiger Form aufgetragen und danach mittels Lichthärtung, Warmhärtung oder einer Kombination davon ausgehärtet, wobei sich Monomere und/oder Oligomere zu Polymeren verketten und/oder vernetzen.

Infolge des Polymerisationsprozesses kommt es beim Aushärten zu einer unvermeidlichen Materialschrumpfung, also zu einer Verringerung des Volumens der Klebstoffzusammensetzung im Vergleich zum Zustand beim Auftragen. Die Schrumpfung kann zum Beispiel Eigenspannungen und Montagefehler verursachen und so die Prozesssicherheit beeinträchtigen. Deshalb wird eine möglichst geringe Schrumpfung angestrebt.

Eine Möglichkeit zur Verringerung der Schrumpfung besteht darin, dass dem polymerisierbaren Grundstoff ein passiver Füllstoff hinzugefügt wird, der selbst nicht schrumpft, aber das Gesamtvolumen der Klebstoffzusammensetzung erhöht und somit die auf das Gesamtvolumen bezogene Schrumpfung senkt. Da die Schrumpfung im polymerisierbaren Grundstoff jedoch unvermeidlich ist, bleibt auch bei Vorhandensein von Füllstoffen stets eine Restschrumpfung. In der Praxis ist es schwierig, diese Restschrumpfung auf 5% oder weniger zu senken.

Es ist auch möglich, die durch Schrumpfung verursachte Positionsänderung bei der Prozessplanung vorrausschauend zu berücksichtigen, also das anzuklebende Bauteil mit einer gezielten Abweichung zu platzieren, so dass es erst durch das Aushärten in die richtige Position gelangt. Dieses Verfahren ist jedoch nur begrenzt wirksam, insbesondere weil die Richtung der Schrumpfung statistischen Schwankungen unterliegt und nur schwer vorhersagbar ist.

Es ist eine Aufgabe der Erfindung, die Schrumpfung von lichthärtbaren und warmhärtbaren Klebstoffen weiter zu verringern.

Die Lösung der Aufgabe erfolgt durch eine Klebstoffzusammensetzung mit den Merkmalen des Anspruchs 1.

Eine erfindungsgemäße Klebstoffzusammensetzung umfasst einen expansionsfähigen Zusatzstoff, der sich unter Einwirkung von Wärme und/oder Licht ausdehnt.

Die Ausdehnung des expansionsfähigen Zusatzstoffs wirkt der Schrumpfung des polymerisierbaren Grundstoffs entgegen, so dass die insgesamt auftretende Schrumpfung der Klebstoffzusammensetzung deutlicher gesenkt werden kann als durch Zugabe von volumenstabilen Füllstoffen. Ferner eröffnet der expansionsfähige Zusatzstoff die Möglichkeit, die Schrumpfung in einem gewissen Umfang zu steuern, also ein vorgegebenes Maß an Schrumpfung vorzusehen. Die erfindungsgemäße Klebstoffzusammensetzung ermöglicht so ein wesentlich präziseres und zuverlässigeres Festkleben von Bauteilen im Rahmen der Produktfertigung.

Das Mengenverhältnis des polymerisierbaren Grundstoffs und des expansionsfähigen Zusatzstoffs kann so gewählt sein, dass bei der Aushärtung des polymerisierbaren Grundstoffs dessen Schrumpfung durch die Ausdehnung des expansionsfähigen Zusatzstoffs kompensiert wird. Das heißt, es kann durch Mischen des Grundstoffs und des Zusatzstoffs in einem geeigneten Mengenverhältnis dafür gesorgt werden, dass nur eine geringe oder überhaupt keine nennenswerte Gesamtschrumpfung der Klebstoffzusammensetzung auftritt.

Insbesondere kann das Mengenverhältnis so gewählt sein, dass die Schrumpfung des polymerisierbaren Grundstoffs durch die Ausdehnung des expansionsfähigen Zusatzstoffs gerade kompensiert wird. In diesem Idealfall ist die Gesamtschrumpfung der Klebstoffzusammensetzung Null oder zumindest nahe bei Null.

Das Mengenverhältnis des polymerisierbaren Grundstoffs und des expansionsfähigen Zusatzstoffs kann aber auch so gewählt sein, dass bei der Aushärtung des polymerisierbaren Grundstoffs die Ausdehnung des expansionsfähigen Zusatzstoffs die Schrumpfung des polymerisierbaren Grundstoffs übersteigt. In diesem Fall ist das Volumen der Klebstoffzusammensetzung nach dem Aushärten größer als vor dem Aushärten. Eine Menge an Klebstoffzusammensetzung, die sich nach dem Auftragen ausdehnt, ist in verschiedenen Anwendungssituationen vorteilhaft. Beispielsweise kann eine expandierende Klebstoffzusammensetzung einen Druck auf das festgeklebte Bauteil ausüben.

Gemäß einer Ausführungsform der Erfindung umfasst der expansionsfähige Zusatzstoff ein pulverförmiges Polymer. Pulverförmige Polymere sind in der Lage, absorbierte Lichtenergie und/oder thermische Energie in eine Volumenvergrößerung umzusetzen.

Das pulverförmige Polymer kann eine mittlere Korngröße von wenigstens 5 µm und höchstens 200 µm, bevorzugt von wenigstens 10 µm und höchstens 80 µm und besonders bevorzugt von wenigstens 20 µm und höchstens 40 µm aufweisen. Ein derartiges Pulver hat sich hinsichtlich der Verarbeitbarkeit und der expansiven Eigenschaften als besonders günstig herausgestellt.

Bevorzugt ist das pulverförmige Polymer ausgewählt aus der Gruppe umfassend Polyethylene, Polypropylene, Polyester, Polycarbonate und Polyvinylchloride. Besonders bevorzugt umfasst der expansionsfähige Zusatzstoff ein pulverförmiges Polyethylen.

Der polymerisierbare Grundstoff kann ein Acrylat-basierter, Epoxid-basierter, Vinylether-basierter, Silikon-basierter, Thiol-En-basierter oder Polyester-basierter Klebstoff sein. Solche Grundstoffe eignen sich in besonderer Weise für eine Zugabe eines durch Licht und/oder Wärme expandierbaren Zusatzstoffs.

Der polymerisierbare Grundstoff kann in einer Menge von 10 bis 90 Gewichts-%, bevorzugt in einer Menge von 30 bis 80 Gewichts-% und besonders bevorzugt in einer Menge von 50 bis 70 Gewichts-% enthalten sein. Die Bezugsmenge ist hierbei die Gesamtmasse der Klebstoffzusammensetzung. Eine spezielle Ausführungsform sieht vor, dass der polymerisierbare Grundstoff in einer Menge von zumindest im Wesentlichen 60 Gewichts-% in der Klebstoffzusammensetzung enthalten ist.

Der expansionsfähige Zusatzstoff kann in einer Menge von 1 bis 70 Gewichts-%, bevorzugt in einer Menge von 10 bis 60 Gewichts-% und besonders bevorzugt in einer Menge von 30 bis 50 Gewichts-% enthalten sein. Die Bezugsmenge ist hierbei die Gesamtmasse der Klebstoffzusammensetzung. Eine spezielle Ausführungsform sieht vor, dass der expansionsfähige Zusatzstoff in einer Menge von zumindest im Wesentlichen 40 Gewichts-% in der Klebstoffzusammensetzung enthalten ist.

Die Erfindung betrifft auch eine Verwendung einer wie vorstehend beschriebenen Klebstoffzusammensetzung bei der Herstellung eines optoelektronischen Sensors, der wenigstens eine optische oder optomechanische Komponente und ein Haltebauteil für die optische oder optomechanische Komponente umfasst, wobei die Klebstoffzusammensetzung in fließfähiger Form auf die optische oder optomechanische Komponente und/oder auf das Haltebauteil aufgetragen wird, die optische oder optomechanische Komponente in einen Kontakt mit dem Haltebauteil gebracht wird und die Klebstoffzusammensetzung durch Einwirkung von Wärme und/oder Licht ausgehärtet wird.

Der optoelektronische Sensor kann durch die Verwendung einer nur geringfügig oder überhaupt nicht schrumpfenden oder sogar expandierenden Klebstoffzusammensetzung ohne Zusatzaufwand besonders zuverlässig gefertigt werden. Insbesondere kann eine unerwünschte nachträgliche Fehlpositionierung von geklebten Komponenten vermieden werden. Weiterhin kann die steuerbare Volumenänderung der Klebstoffzusammensetzung für eine gezielte nachträgliche Positionsänderung von Komponenten genutzt werden.

Bei dem optoelektronischen Sensor kann es sich um einen Laserscanner, beispielsweise um einen LIDAR-Scanner, handeln. Der optoelektronische Sensor kann als optische Komponente eine Linse, ein Objektiv, einen Filter, einen Spiegel oder dergleichen aufweisen. Ferner kann der optoelektronische Sensor als optomechanische Komponente einen Tubus, eine Halterung oder ein Positioniersystem aufweisen.

Das Haltebauteil kann ein ohnehin vorhandenes Teil des optoelektronischen Sensors sein, zum Beispiel ein Gehäuse, eine Basisplatte oder dergleichen. Im Prinzip kann das Haltebauteil auch ein separates Bauteil sein, das nachträglich in den optoelektronischen Sensor eingebaut wird.

Weiterbildungen der Erfindung sind auch den abhängigen Ansprüchen, der Beschreibung sowie den beigefügten Zeichnungen zu entnehmen.

Die Erfindung wird nachfolgend anhand eines Beispiels beschrieben.

Bei Raumtemperatur wurden zum Erzeugen einer erfindungsgemäßen Klebstoffzusammensetzung 6 Gramm eines Acrylat-Klebstoffs mit 4 Gramm eines pulverförmigen Polyethylens durch Rühren vermischt.

Bei dem Acrylat-Klebstoff handelte es sich um einen lösemittelfreien Einkomponenten-Klebstoff auf Basis von modifiziertem Urethan-Acrylat, der unter der Bezeichnung *"Photobond AD491"* von *DELO Industrie Klebstoffe GmbH & Co. KGaA* kommerziell erhältlich ist. Bei dem pulverförmigen Polyethylen handelte es sich um ein Pulver mit einer Partikelgröße von 35 µm, das unter der Bezeichnung *"HMPE35A" von Goonvean Fibres Ltd.* kommerziell erhältlich ist.

Das hergestellte fließfähige Gemisch wurde tropfenweise auf Objektglasträger aufgebracht, wobei sich jeweils eine Schicht von etwa 10 µm bildete. Anschließend wurden die Tropfen für eine Zeitdauer von 3 Sekunden mit ultraviolettem Licht bestrahlt. Hierfür wurde eine LED-Lampe mit der Peak-Wellenlänge 365 nm verwendet. Die Klebstoffzusammensetzung war danach vollständig ausgehärtet.

Die Schichtdicke und die Größe der ausgehärteten Tropfen wurden nach der Bestrahlung gemessen. Es wurde festgestellt, dass das Volumen der Tropfen nach dem Aushärten um etwa 5% größer war als vor dem Aushärten.

Einige Tropfen wurden für eine Zeitdauer von 5 Sekunden, 7 Sekunden und 9 Sekunden mit ultraviolettem Licht bestrahlt. Hierbei zeigte sich, dass das Volumen der Tropfen mit zunehmender Zeitdauer geringer ist. Das bedeutet, dass durch Auswahl einer geeigneten Zeitdauer erreicht werden kann, dass sich das Volumen beim Aushärten überhaupt nicht ändert.

Ein weiterer Tropfen wurde nicht mit ultraviolettem Licht bestrahlt, sondern stattdessen in einem Labor-Ofen einer thermischen Nachbehandlung bei einer Temperatur von 130 °C für eine Zeitdauer von 30 Minuten ausgesetzt. Es wurde wiederum eine Ausdehnung des Volumens um etwa 5% festgestellt.

Grundsätzlich kann die thermische Nachbehandlung bei Raumtemperatur, beispielsweise bei 20°C bis 25°C, beginnen und dann unter schrittweiser Erhöhung der Prozesstemperatur bis zum vorgegebenen Zielwert, beispielsweise 130°C, weitergeführt werden. Sobald die Aushärtung abgeschlossen ist, kann die Klebstoffmasse abgekühlt werden. Bei steigender Temperatur dehnen sich die Polyethylen-Mikropartikel aus. Diese Ausdehnung ist gewünscht, damit die Partikel die gewünschte Wirkung im Material entfalten.

Die beschriebene Klebstoffzusammensetzung kann bei der Herstellung eines optoelektronischen Sensors zum Befestigen einer oder mehrerer optischer oder optomechanischer Komponenten an einem Haltebauteil wie einem Gehäuse oder einer Grundplatte verwendet werden. Da beim Aushärten der Klebstoffzusammensetzung keine Schrumpfung auftritt, kann eine hohe Präzision bei der Positionierung der Komponenten gewährleistet werden. Darüber hinaus kann die Ausdehnung der Klebstoffzusammensetzung in vorteilhafter Weise dazu genutzt werden, einen Druck auf die festgeklebten Komponenten auszuüben.

## Patentansprüche

1. Klebstoffzusammensetzung umfassend einen polymerisierbaren Grundstoff, der durch Einwirkung von Wärme und/oder Licht unter Schrumpfung in einen ausgehärteten Zustand überführbar ist,
**gekennzeichnet durch**
einen expansionsfähigen Zusatzstoff, der sich unter einer Einwirkung von Wärme und/oder Licht ausdehnt.

2. Klebstoffzusammensetzung nach Anspruch 1,
**dadurch gekennzeichnet, dass**
das Mengenverhältnis des polymerisierbaren Grundstoffs und des expansionsfähigen Zusatzstoffs so gewählt ist, dass bei der Aushärtung des polymerisierbaren Grundstoffs dessen Schrumpfung durch die Ausdehnung des expansionsfähigen Zusatzstoffs kompensiert wird.

3. Klebstoffzusammensetzung nach Anspruch 1,
**dadurch gekennzeichnet, dass**
das Mengenverhältnis des polymerisierbaren Grundstoffs und des expansionsfähigen Zusatzstoffs so gewählt ist, dass bei der Aushärtung des polymerisierbaren Grundstoffs die Ausdehnung des expansionsfähigen Zusatzstoffs die Schrumpfung des polymerisierbaren Grundstoffs übersteigt.

4. Klebstoffzusammensetzung nach einem der vorstehenden Ansprüche,
**dadurch gekennzeichnet, dass**
der expansionsfähige Zusatzstoff ein pulverförmiges Polymer umfasst.

5. Klebstoffzusammensetzung nach Anspruch 4,
**dadurch gekennzeichnet, dass**
das pulverförmige Polymer eine mittlere Korngröße von wenigstens 5 µm und höchstens 200 µm, bevorzugt von wenigstens 10 µm und höchstens 80 µm und besonders bevorzugt von wenigstens 20 µm und höchstens 40 µm aufweist.

6. Klebstoffzusammensetzung nach Anspruch 4 oder 5,
**dadurch gekennzeichnet, dass**
das pulverförmige Polymer ausgewählt ist aus der Gruppe umfassend Polyethylene, Polypropylene, Polyester, Polycarbonate und Polyvinylchloride.

7. Klebstoffzusammensetzung nach einem der vorstehenden Ansprüche,
**dadurch gekennzeichnet, dass**
der polymerisierbare Grundstoff ein Acrylat-basierter, Epoxid-basierter, Vinylether-basierter, Silikon-basierter, Thiol-En-basierter oder Polyester-basierter Klebstoff ist.

8. Klebstoffzusammensetzung nach einem der vorstehenden Ansprüche,
**dadurch gekennzeichnet, dass**
der polymerisierbare Grundstoff in einer Menge von 10 bis 90 Gewichts-%, bevorzugt in einer Menge von 30 bis 80 Gewichts-% und besonders bevorzugt in einer Menge von 50 bis 70 Gewichts-% enthalten ist.

9. Klebstoffzusammensetzung nach einem der vorstehenden Ansprüche,
**dadurch gekennzeichnet, dass**
der expansionsfähige Zusatzstoff in einer Menge von 1 bis 70 Gewichts-%, bevorzugt in einer Menge von 10 bis 60 Gewichts-% und besonders bevorzugt in einer Menge von 30 bis 50 Gewichts-% enthalten ist.

10. Verwendung einer Klebstoffzusammensetzung nach einem der vorstehenden Ansprüche bei der Herstellung eines optoelektronischen Sensors, der wenigstens eine optische oder optomechanische Komponente und ein Haltebauteil für die optische oder optomechanische Komponente umfasst, wobei die Klebstoffzusammensetzung in fließfähiger Form auf die optische oder optomechanische Komponente und/oder auf das Haltebauteil aufgetragen wird, die optische oder optomechanische Komponente in einen Kontakt mit dem Haltebauteil gebracht wird und die Klebstoffzusammensetzung durch Einwirkung von Wärme und/oder Licht ausgehärtet wird.
